# EUROPEAN PATENT APPLICATION

(11) **EP 3 255 940 A1**
(43) Date of publication of application: **13.12.2017**
(21) Application number: 15884977.8
(22) Date of filing: 16.03.2015
(51) Int. Cl.: H04W 64/00

(54) **INDOOR POSITIONING METHOD AND APPARATUS**

(71) Applicant: Huawei Technologies Co., Ltd., Longgang District Shenzhen, Guangdong 518129 (CN)
(72) Inventor: XUE, Jiantao, Shenzhen Guangdong 518129 (CN); CUI, Jie, Shenzhen Guangdong 518129 (CN); LI, Anjian, Shenzhen Guangdong 518129 (CN)
(74) Representative: Goddar, Heinz J.
(86) International application number: PCT/CN2015/074290
(87) International publication number: WO 2016/145593

(57) **Abstract**

Embodiments of the present invention relate to the field of mobile communications technologies, and in particular, to an indoor positioning method and an apparatus. In this solution, a positioning server obtains floor numbers of floors on which at least one base station is located; the positioning server receives identification information of a first terminal; the positioning server determines the first terminal according to the identification information; and the positioning server determines vertical location information of the first terminal according to the floor numbers of the floors on which the at least one base station is located. When a terminal is located indoors, positioning is meaningful only when a specific floor on which the terminal is located is determined. In the solution, when the terminal is located indoors, in addition to a vertical altitude of the terminal, a specific floor on which the terminal is located is determined. Therefore, positioning accuracy is improved.

## Description

### TECHNICAL FIELD

The present invention relates to the field of communications technologies, and in particular, to an indoor positioning method and an apparatus.

### BACKGROUND

At present, with development of mobile communications technologies and a growth of service requirements, positioning services based on a location of a mobile terminal are increasing. Positioning-based services relate to many fields, such as transportation, logistics, public security, emergency service, and daily life, and can provide numerous services, such as navigation, logistics management, transportation information, and scheduling. Therefore, the services are applied widely.

Positioning methods defined in the 3GPP (3^{rd} Generation Partnership Project, 3^{rd} Generation Partnership Project) protocol include an E-CID (Enhanced Cell Identification, enhanced cell identification) positioning method and an OTDOA (Observed Time Difference of Arrival, observed time difference of arrival) positioning method.

The E-CID positioning method is usually used in cellular mobile communications, and can be easily implemented. In this positioning manner, each cell has its own specific cell identity number (Cell ID). When entering a cell, a mobile terminal needs to register in the current cell, and then data on a positioning server includes a cell identity of the corresponding cell. The positioning server determines a location of the mobile terminal according to a collected identity of a cell in which the mobile terminal is located.

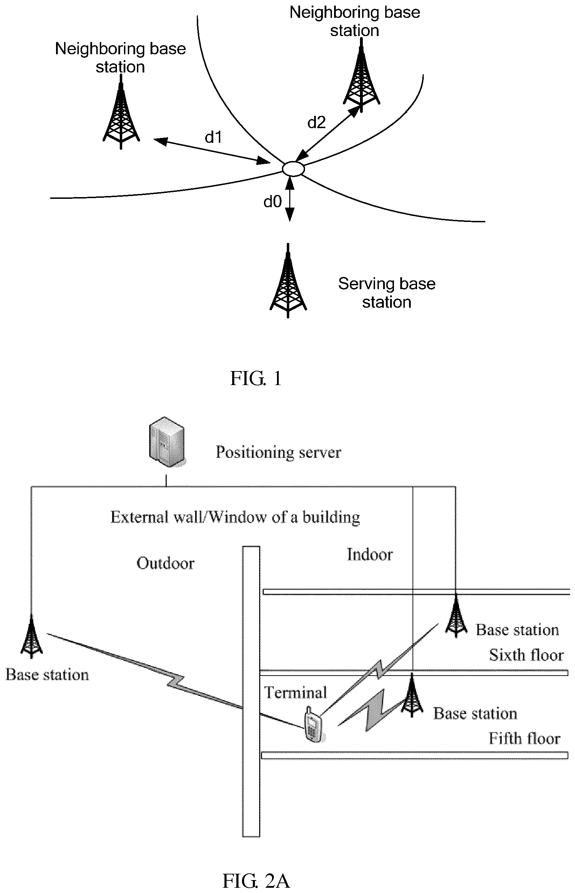

The OTDOA is a common positioning method. As shown in FIG. 1, the mobile terminal listens to a base station, and measures an RSTD (Reference Signal Time Difference, reference signal time difference). One measurement value is obtained for every two base stations, and one hyperbola positioning area is formed. Therefore, two hyperbola positioning areas are obtained for three base stations. A boundary point may be solved, and an exact location of the mobile terminal may be obtained by using an additional condition.

Location information in a horizontal direction and location information in a vertical direction of a target object can be finally obtained in a positioning process. In the foregoing two methods, regardless of an indoor scenario or an outdoor scenario, all pieces of location information in the vertical direction obtained by means of positioning are an altitude (Altitude) and altitude uncertainty (Altitude Uncertainty) of the mobile terminal. However, when the mobile terminal is located indoors, if the altitude and the altitude uncertainty of the mobile terminal are used to indicate the location information in the vertical direction, positioning accuracy is relatively low.

In conclusion, the current indoor positioning method has a disadvantage of relatively low accuracy.

### SUMMARY

Embodiments of the present invention provide an indoor positioning method and an apparatus, so as to overcome a disadvantage of relatively low accuracy in the prior art.

Specific technical solutions provided in the embodiments of the present invention are as follows:
According to a first aspect, an indoor positioning method is provided, including:
   obtaining, by a positioning server, floor numbers of floors on which at least one base station is located;
   receiving, by the positioning server, identification information of a first terminal;
   determining, by the positioning server, the first terminal according to the identification information; and
   determining, by the positioning server, vertical location information of the first terminal according to the floor numbers of the floors on which the at least one base station is located.

With reference to the first aspect, in a first possible implementation, the floor numbers of the floors on which the at least one base station is located include a floor number of a floor on which a first base station is located, where the first base station is a serving base station of the first terminal; and
the determining, by the positioning server, vertical location information of the first terminal according to the floor numbers of the floors on which the at least one base station is located includes:
using, by the positioning server, the floor number of the floor on which the first base station is located as the vertical location information of the first terminal.

With reference to the first aspect, in a second possible implementation, before the determining, by the positioning server, vertical location information of the first terminal according to the floor numbers of the floors on which the at least one base station is located, the method further includes:
sending, by the positioning server, a reference signal sending instruction message to N base stations, where the reference signal sending instruction message is used to instruct the N base stations to separately broadcast a reference signal, and N is a positive integer greater than 0;
sending, by the positioning server, a reference signal receiving instruction message to the first terminal, where the reference signal receiving instruction message is used to instruct the first terminal to receive reference signals broadcast by the N base stations and to feed back N reference signal time differences, the N reference signal time differences are obtained by separately subtracting an arrival time of a reference signal broadcast by a reference base station from arrival times of the reference signals broadcast by the N base stations, and the reference base station is any one of the N base stations;
receiving, by the positioning server, the N reference signal time differences; and
determining, by the positioning server according to the N reference signal time differences a base station corresponding to a reference signal with a shortest arrival time; where
the floor numbers of the floors on which the at least one base station is located include a floor number of a floor on which the base station corresponding to the reference signal with the shortest arrival time is located; and
the determining, by the positioning server, vertical location information of the first terminal according to the floor numbers of the floors on which the at least one base station is located includes:
   using, by the positioning server, the floor number of the floor on which the base station corresponding to the reference signal with the shortest arrival time is located as the vertical location information of the first terminal.

With reference to the first aspect, in a third possible implementation, before the determining, by the positioning server, vertical location information of the first terminal according to the floor numbers of the floors on which the at least one base station is located, the method further includes:
sending, by the positioning server, a reference signal sending instruction message to M base stations, where the reference signal sending instruction message is used to instruct the M base stations to separately broadcast a reference signal, and M is a positive integer greater than 2;
sending, by the positioning server, a reference signal receiving instruction message to the first terminal, where the reference signal receiving instruction message is used to instruct the first terminal to receive reference signals broadcast by the M base stations and to feed back M reference signal time differences, the M reference signal time differences are obtained by separately subtracting an arrival time of a reference signal broadcast by a reference base station from arrival times of the reference signals broadcast by the M base stations, and the reference base station is any one of the M base stations;
receiving, by the positioning server, the M reference signal time differences; and
receiving, by the positioning server, vertical altitudes of the M base stations that are sent by the M base stations; where
the floor numbers of the floors on which the at least one base station is located include floor numbers of floors on which the M base stations are located; and
the determining, by the positioning server, vertical location information of the first terminal according to the floor numbers of the floors on which the at least one base station is located includes:
   obtaining, by the positioning server, a first function relationship according to a mapping relationship between the vertical altitudes of the M base stations and the floor numbers of the M base stations, where the first function relationship is used to represent a correspondence between a floor number and a vertical altitude;
   calculating, by the positioning server, a vertical altitude of the first terminal according to the M reference signal time differences; and
   converting, by the positioning server according to the first function relationship, the vertical altitude that is of the first terminal and that is obtained by means of calculation into a floor number, and using the floor number obtained by means of conversion as the vertical location information of the first terminal.

With reference to the first aspect, in a fourth possible implementation, before the determining, by the positioning server, vertical location information of the first terminal according to the floor numbers of the floors on which the at least one base station is located, the method further includes:
sending, by the positioning server, a reference signal sending instruction message to M base stations, where the reference signal sending instruction message is used to instruct the M base stations to separately broadcast a reference signal, and M is a positive integer greater than 2;
sending, by the positioning server, a reference signal receiving instruction message to the first terminal, where the reference signal receiving instruction message is used to instruct the first terminal to receive reference signals broadcast by the M base stations and to feed back M reference signal time differences, the M reference signal time differences are obtained by separately subtracting an arrival time of a reference signal broadcast by a reference base station from arrival times of the reference signals broadcast by the M base stations, and the reference base station is any one of the M base stations;
receiving, by the positioning server, the M reference signal time differences;
receiving, by the positioning server, M receive powers sent by the first terminal, where the M receive powers are powers used by the first terminal to receive the reference signals broadcast by the M base stations; and
receiving, by the positioning server, vertical altitudes of the M base stations that are sent by the M base stations; where
the floor numbers of the floors on which the at least one base station is located include floor numbers of floors on which the M base stations are located; and
the determining, by the positioning server, vertical location information of the first terminal according to the floor numbers of the floors on which the at least one base station is located includes:
   obtaining, by the positioning server, a second function relationship according to a mapping relationship between the vertical altitudes of the M base stations and the floor numbers of the M base stations, where the second function relationship is used to represent a correspondence between a floor number and a vertical altitude;
   calculating, by the positioning server, a first vertical altitude of the first terminal according to the M reference signal time differences;
   calculating, by the positioning server, a second vertical altitude of the first terminal according to the M receive powers;
   obtaining, by the positioning server, a final vertical altitude of the first terminal according to the first vertical altitude and the second vertical altitude; and
   converting, by the positioning server according to the second function relationship, the final vertical altitude that is of the first terminal and that is obtained by means of calculation into a floor number, and using the floor number obtained by means of conversion as the vertical location information of the first terminal.

With reference to any one of the second to the fourth possible implementations of the first aspect, in a fifth possible implementation, before the obtaining, by a positioning server, floor numbers of floors on which at least one base station is located, the method further includes:
sending, by the positioning server, a positioning measurement request.

According to a second aspect, an indoor positioning method is provided, including:
determining, by a base station, a floor number of a floor on which the base station is located; and
sending, by the base station, the floor number to a positioning server.

With reference to the second aspect, in a first possible implementation, the method further includes:
sending, by the base station, identification information of a first terminal to the positioning server, where the base station is a serving base station of the first terminal.

With reference to the second aspect, in a second possible implementation, the method further includes:
receiving, by the base station, a reference signal sending instruction message sent by the positioning server; and
broadcasting, by the base station, a reference signal according to the reference signal sending instruction message; where
the base station is a base station corresponding to a reference signal with a shortest arrival time among N reference signal time differences sent by a first terminal, the N reference signal time differences are obtained by separately subtracting an arrival time of a reference signal broadcast by a reference base station from arrival times of reference signals broadcast by N base stations, the reference base station is any one of the N base stations, and N is a positive integer greater than 0.

With reference to the second aspect, in a third possible implementation, the method further includes:
receiving, by the base station, a reference signal sending instruction message sent by the positioning server;
broadcasting, by the base station, a reference signal according to the reference signal sending instruction message; and
sending, by the base station, a vertical altitude of the base station.

With reference to any one of the second aspect, or the first to the third possible implementations of the second aspect, in a fourth possible implementation, before the sending, by the base station, the floor number to a positioning server, the method further includes:
receiving, by the base station, the positioning measurement request sent by the positioning server; or
receiving, by the base station, a positioning measurement request sent by a terminal served by the base station.

According to a third aspect, a positioning server is provided, including:
an obtaining unit, configured to obtain floor numbers of floors on which at least one base station is located;
a receiving unit, configured to receive identification information of a first terminal; and
a determining unit, configured to determine the first terminal according to the identification information; where
the determining unit is further configured to determine vertical location information of the first terminal according to the floor numbers of the floors on which the at least one base station is located.

With reference to the third aspect, in a first possible implementation, the floor numbers of the floors on which the at least one base station is located include a floor number of a floor on which a first base station is located, where the first base station is a serving base station of the first terminal; and
when determining the vertical location information of the first terminal according to the floor numbers of the floors on which the at least one base station is located, the determining unit is specifically configured to:
use the floor number of the floor on which the first base station is located as the vertical location information of the first terminal.

With reference to the third aspect, in a second possible implementation, a sending unit is further included, and the sending unit is configured to:
send a reference signal sending instruction message to N base stations, where the reference signal sending instruction message is used to instruct the N base stations to separately broadcast a reference signal, and N is a positive integer greater than 0; where
the sending unit is further configured to send a reference signal receiving instruction message to the first terminal, where the reference signal receiving instruction message is used to instruct the first terminal to receive reference signals broadcast by the N base stations and to feed back N reference signal time differences, the N reference signal time differences are obtained by separately subtracting an arrival time of a reference signal broadcast by a reference base station from arrival times of the reference signals broadcast by the N base stations, and the reference base station is any one of the N base stations;
the receiving unit is further configured to receive the N reference signal time differences;
the determining unit is further configured to determine, according to the N reference signal time differences, a base station corresponding to a reference signal with a shortest arrival time;
the floor numbers that are of the floors on which the at least one base station is located and obtained by the obtaining unit include a floor number of a floor on which the base station corresponding to the reference signal with the shortest arrival time is located; and
when determining the vertical location information of the first terminal according to the floor numbers of the floors on which the at least one base station is located, the determining unit is specifically configured to:
   use the floor number of the floor on which the base station corresponding to the reference signal with the shortest arrival time is located as the vertical location information of the first terminal.

With reference to the third aspect, in a third possible implementation, a sending unit is further included, and the sending unit is configured to:
send a reference signal sending instruction message to M base stations, where the reference signal sending instruction message is used to instruct the M base stations to separately broadcast a reference signal, and M is a positive integer greater than 2; where
the sending unit is further configured to send a reference signal receiving instruction message to the first terminal, where the reference signal receiving instruction message is used to instruct the first terminal to receive reference signals broadcast by the M base stations and to feed back M reference signal time differences, the M reference signal time differences are obtained by separately subtracting an arrival time of a reference signal broadcast by a reference base station from arrival times of the reference signals broadcast by the M base stations, and the reference base station is any one of the M base stations;
the receiving unit is further configured to receive the M reference signal time differences;
the receiving unit is further configured to receive vertical altitudes of the M base stations that are sent by the M base stations;
the floor numbers that are of the floors on which the at least one base station is located and obtained by the obtaining unit include floor numbers of floors on which the M base stations are located; and
when determining the vertical location information of the first terminal according to the floor numbers of the floors on which the at least one base station is located, the determining unit is specifically configured to:
   obtain a first function relationship according to a mapping relationship between the vertical altitudes of the M base stations and the floor numbers of the M base stations, where the first function relationship is used to represent a correspondence between a floor number and a vertical altitude;
   calculate a vertical altitude of the first terminal according to the M reference signal time differences; and
   convert, according to the first function relationship, the vertical altitude that is of the first terminal and that is obtained by means of calculation into a floor number, and use the floor number obtained by means of conversion as the vertical location information of the first terminal.

With reference to the third aspect, in a fourth possible implementation, a sending unit is further included, and the sending unit is configured to:
send a reference signal sending instruction message to M base stations, where the reference signal sending instruction message is used to instruct the M base stations to separately broadcast a reference signal, and M is a positive integer greater than 2; where
the sending unit is further configured to send a reference signal receiving instruction message to the first terminal, where the reference signal receiving instruction message is used to instruct the first terminal to receive reference signals broadcast by the M base stations and to feed back M reference signal time differences, the M reference signal time differences are obtained by separately subtracting an arrival time of a reference signal broadcast by a reference base station from arrival times of the reference signals broadcast by the M base stations, and the reference base station is any one of the M base stations;
the receiving unit is further configured to receive the M reference signal time differences;
the receiving unit is further configured to receive M receive powers sent by the first terminal, where the M receive powers are powers used by the first terminal to receive the reference signals broadcast by the M base stations;
the receiving unit is further configured to receive vertical altitudes of the M base stations that are sent by the M base stations;
the floor numbers that are of the floors on which the at least one base station is located and obtained by the obtaining unit include floor numbers of floors on which the M base stations are located; and
when determining the vertical location information of the first terminal according to the floor numbers of the floors on which the at least one base station is located, the determining unit is specifically configured to:
   obtain a second function relationship according to a mapping relationship between the vertical altitudes of the M base stations and the floor numbers of the M base stations, where the second function relationship is used to represent a correspondence between a floor number and a vertical altitude;
   calculate a first vertical altitude of the first terminal according to the M reference signal time differences;
   calculate a second vertical altitude of the first terminal according to the M receive powers;
   obtain a final vertical altitude of the first terminal according to the first vertical altitude and the second vertical altitude; and
   convert, according to the second function relationship, the final vertical altitude that is of the first terminal and that is obtained by means of calculation into a floor number, and use the floor number obtained by means of conversion as the vertical location information of the first terminal.

With reference to any one of the second to the fourth possible implementations of the third aspect, in a fifth possible implementation, the sending unit is further configured to:
send a positioning measurement request.

According to a fourth aspect, a base station is provided, including:
a determining unit, configured to determine a floor number of a floor on which the base station is located; and
a sending unit, configured to send the floor number to a positioning server.

With reference to the fourth aspect, in a first possible implementation, the sending unit is further configured to:
send identification information of a first terminal to the positioning server, where the base station is a serving base station of the first terminal.

With reference to the fourth aspect, in a second possible implementation, a receiving unit is further included, and the receiving unit is configured to:
receive a reference signal sending instruction message sent by the positioning server; where
the sending unit is further configured to broadcast a reference signal according to the reference signal sending instruction message; and
the base station is a base station corresponding to a reference signal with a shortest arrival time among N reference signal time differences sent by a first terminal, the N reference signal time differences are obtained by separately subtracting an arrival time of a reference signal broadcast by a reference base station from arrival times of reference signals broadcast by N base stations, the reference base station is any one of the N base stations, and N is a positive integer greater than 0.

With reference to the fourth aspect, in a third possible implementation, a receiving unit is further included, and the receiving unit is configured to:
receive a reference signal sending instruction message sent by the positioning server; where
the sending unit is further configured to broadcast a reference signal according to the reference signal sending instruction message; and
the sending unit is further configured to send a vertical altitude of the base station.

With reference to any one of the fourth aspect, or the first to the third possible implementations of the fourth aspect, in a fourth possible implementation, the receiving unit is further configured to:
receive the positioning measurement request sent by the positioning server; or
receive a positioning measurement request sent by a terminal served by the base station.

The embodiments of the present invention provide an indoor positioning method. In this solution, a positioning server obtains floor numbers of floors on which at least one base station is located; the positioning server receives identification information of a first terminal; the positioning server determines the first terminal according to the identification information; and the positioning server determines vertical location information of the first terminal according to the floor numbers of the floors on which the at least one base station is located. When a terminal is located indoors, positioning is meaningful only when a specific floor on which the terminal is located is determined. In the solution, when the terminal is located indoors, in addition to a vertical altitude of the terminal, a specific floor on which the terminal is located is determined. Therefore, positioning accuracy is improved.

### BRIEF DESCRIPTION OF DRAWINGS

FIG. 1 is a schematic diagram of OTDOA positioning in the prior art;
FIG. 2A is a schematic diagram of an indoor positioning scenario according to an embodiment of the present invention;
FIG. 2B is a flowchart of indoor positioning according to an embodiment of the present invention;
FIG. 3 is another flowchart of indoor positioning according to an embodiment of the present invention;
FIG. 4A is an embodiment of indoor positioning according to an embodiment of the present invention;
FIG. 4B is another embodiment of indoor positioning according to an embodiment of the present invention;
FIG. 4C is another embodiment of indoor positioning according to an embodiment of the present invention;
FIG. 5A is a schematic structural diagram of a positioning server according to an embodiment of the present invention;
FIG. 5B is another schematic structural diagram of a positioning server according to an embodiment of the present invention;
FIG. 6A is a schematic structural diagram of a base station according to an embodiment of the present invention; and
FIG. 6B is another schematic structural diagram of a base station according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

Technologies described in this specification may be applied to various communications systems, for example, current 2G and 3G communications systems and a next-generation communications system, such as a GSM (Global System for Mobile Communications, Global System for Mobile Communications), a CDMA (Code Division Multiple Access, Code Division Multiple Access) system, a TDMA (Time Division Multiple Access, Time Division Multiple Access) system, a WCDMA (Wideband Code Division Multiple Access Wireless, Wideband Code Division Multiple Access) system, an FDMA (Frequency Division Multiple Addressing, Frequency Division Multiple Access) system, an OFDMA (Orthogonal Frequency-Division Multiple Access, Orthogonal Frequency Division Multiple Access) system, a single-carrier FDMA (SC-FDMA) system, a GPRS (General Packet Radio Service, general packet radio service) system, and another similar communications system.

In the following, the embodiments of the present invention are described in detail with reference to the accompanying drawings. It should be understood that the embodiments described herein are merely used to illustrate and explain the present invention, but are not intended to limit the present invention. In addition, the embodiments in this application and features in the embodiments may be mutually combined in a case in which they do not conflict with each other.

The following describes the embodiments of the present invention in detail with reference to the accompanying drawings.

A schematic diagram of an indoor positioning scenario is shown in FIG. 2A.

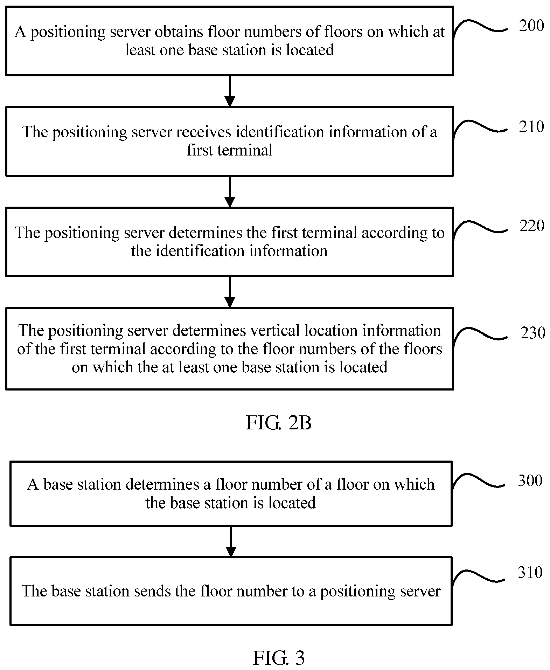

Referring to FIG. 2B, in this embodiment of the present invention, an indoor positioning procedure is as follows:
Step 200: A positioning server obtains floor numbers of floors on which at least one base station is located.

In this embodiment of the present invention, the floor number may be 2, 3, 4, or the like. The floor number is specifically carried in a message, and the floor number may be a value in a floor index field.

According to the foregoing description, the positioning server needs to obtain the floor numbers of the floors on which the at least one base station is located. However, if the positioning server determines only the floor numbers, but does not learn location information of a building, positioning is meaningless, and accuracy is relatively low. For example, a base station A reports to the positioning server that a floor number of a floor on which the base station A is located is 2. For a terminal 1 served by the base station A, if the positioning server uses the floor number of the floor on which the base station A is located as vertical location information of the terminal 1, that is, the positioning server learns only that the terminal 1 is located on the second floor, but does not learn a specific building in which the terminal 1 is located, thus the positioning is still meaningless. Therefore, in this embodiment of the present invention, the positioning server not only needs to obtain the floor numbers of the floors on which the at least one base station is located, but also needs to obtain coordinate information of a location of the at least one base station, for example, (X, Y, Z). In this way, the positioning server can determine, according to the coordinate information sent by the base station, a building in which the base station is located, and can determine, according to the floor number, a specific floor on which the terminal is located, so that accurate positioning can be implemented.

However, a current protocol has specified that a base station needs to send coordinate information of a location of the base station to a positioning server when positioning is performed. Therefore, details are not described herein.

In this embodiment of the present invention, if the positioning server needs to obtain the floor numbers of the floors on which the at least one base station is located, for any base station in the at least one base station, the base station needs to receive a positioning measurement request message, so that the base station can be triggered to send a floor number of a floor on which the base station is located. The positioning measurement request message may be sent by the positioning server, or may be sent by a terminal served by the base station. If the positioning measurement request message is to be sent by the positioning server, the positioning server needs to send the positioning measurement request message before obtaining the floor numbers of the floors on which the at least one base station is located.

In this embodiment of the present invention, the positioning server may send the positioning measurement request in real time or periodically.

In this embodiment of the present invention, the positioning measurement request may be an E-CID measurement initiation request.
Step 210: The positioning server receives identification information of a first terminal.

In this embodiment of the present invention, the identification information of the first terminal may be a TMSI (Temporary Mobile Subscriber Identity, temporary mobile subscriber identity), or may be an IMSI (International Mobile Subscriber Identity, international mobile subscriber identity), or certainly may be information in another form. Details are not described herein.

In this embodiment of the present invention, there is no sequence relationship between step 200 and step 210. That is, it may be that after the positioning server obtains the floor numbers of the floors on which the at least one base station is located, the positioning server receives the identification information of the first terminal. Alternatively, it may be that after the positioning server receives the identification information of the first terminal, the positioning server obtains the floor numbers of the floors on which the at least one base station is located.
Step 220: The positioning server determines the first terminal according to the identification information.
Step 230: The positioning server determines vertical location information of the first terminal according to the floor numbers of the floors on which the at least one base station is located.

In this embodiment of the present invention, optionally, the floor numbers of the floors on which the at least one base station is located include a floor number of a floor on which a first base station is located. The first base station is a serving base station of the first terminal.

In this case, the positioning server may determine, in multiple manners, the vertical location information of the first terminal according to the floor numbers of the floors on which the at least one base station is located. Optionally, the following manner may be used:
using, by the positioning server, the floor number of the floor on which the first base station is located as the vertical location information of the first terminal.

For example, there are three base stations in a positioning area: a base station 1, a base station 2, and a base station 3. The positioning server sends a positioning measurement request to the three base stations. The base station 1 serves 10 terminals: a terminal 1 to a terminal 10; the base station 2 also serves 10 terminals: a terminal 11 to a terminal 20; and the base station 3 also serves 10 terminals: a terminal 21 to a terminal 30. The base station 1 sends, to the positioning server, a floor number of the base station 1 and identification information of each terminal in the terminal 1 to the terminal 10. Likewise, the base station 2 sends, to the positioning server, a floor number of the base station 2 and identification information of each terminal in the terminal 11 to the terminal 20; and the base station 3 sends, to the positioning server, a floor number of the base station 3 and identification information of each terminal in the terminal 21 to the terminal 30. The positioning server uses the floor number of the base station 1 as vertical location information of the terminal 1 to the terminal 10; the positioning server uses the floor number of the base station 2 as vertical location information of the terminal 11 to the terminal 20; and the positioning server uses the floor number of the base station 3 as vertical location information of the terminal 21 to the terminal 30.

According to the foregoing description, a floor number of a floor on which a serving base station of a terminal is located is used as vertical location information of the terminal. However, because accuracy is relatively low, to further improve positioning accuracy, the following manner may further be used:

Before the positioning server determines the vertical location information of the first terminal according to the floor numbers of the floors on which the at least one base station is located, the following operations may further be included:
sending, by the positioning server, a reference signal sending instruction message to N base stations, where the reference signal sending instruction message is used to instruct the N base stations to separately broadcast a reference signal, and N is a positive integer greater than 0;
sending, by the positioning server, a reference signal receiving instruction message to the first terminal, where the reference signal receiving instruction message is used to instruct the first terminal to receive reference signals broadcast by the N base stations and to feed back N reference signal time differences, the N reference signal time differences are obtained by separately subtracting an arrival time of a reference signal broadcast by a reference base station from arrival times of the reference signals broadcast by the N base stations, and the reference base station is any one of the N base stations;
receiving, by the positioning server, the N reference signal time differences; and
determining, by the positioning server according to the N reference signal time differences, a base station corresponding to a reference signal with a shortest arrival time; where
the floor numbers of the floors on which the at least one base station is located include a floor number of a floor on which the base station corresponding to the reference signal with the shortest arrival time is located. For example, there are three base stations in a positioning area: a base station 1, a base station 2, and a base station 3. The base station 1 serves a terminal A and a terminal B. The positioning server sends a reference signal sending instruction message to all the three base stations. The base station 1, the base station 2, and the base station 3 each begin to broadcast a reference signal after receiving the reference signal sending instruction message. If the positioning server needs to position the terminal A, the positioning server sends a reference signal receiving instruction message to the terminal A. After receiving the reference signal receiving instruction message, the terminal A receives reference signals respectively broadcast by the base station 1, the base station 2, and the base station 3. A time of receiving, by the terminal A, a reference signal broadcast by the base station 1 is Is, a time of receiving a reference signal broadcast by the base station 2 is 2s, and a time of receiving a reference signal broadcast by the base station 3 is 3s. If a reference base station is the base station 3, a time difference of the reference signal broadcast by the base station 1 and received by the terminal A is -2s, a time difference of the reference signal broadcast by the base station 2 and received by the terminal A is -Is, and a time difference of the reference signal broadcast by the base station 3 and received by the terminal A is 0s. Therefore, a base station corresponding to a reference signal with a shortest arrival time is the base station 1.

For another example, there are three base stations in a positioning area: a base station 1, a base station 2, and a base station 3. The base station 1 serves a terminal A and a terminal B. The positioning server sends a reference signal sending instruction message to all the three base stations. The base station 1, the base station 2, and the base station 3 each begin to broadcast a reference signal after receiving the reference signal sending instruction message. If the positioning server needs to position the terminal A, the positioning server sends a reference signal receiving instruction message to the terminal A. After receiving the reference signal receiving instruction message, the terminal A receives reference signals respectively broadcast by the base station 1, the base station 2, and the base station 3. A time of receiving, by the terminal A, a reference signal broadcast by the base station 1 is Is, a time of receiving a reference signal broadcast by the base station 2 is 2s, and a time of receiving a reference signal broadcast by the base station 3 is 3s. If a reference base station is the base station 1, a time difference of the reference signal broadcast by the base station 1 and received by the terminal A is 0s, a time difference of the reference signal broadcast by the base station 2 and received by the terminal A is Is, and a time difference of the reference signal broadcast by the base station 3 and received by the terminal A is 2s. Therefore, a base station corresponding to a reference signal with a shortest arrival time is the base station 1.

The foregoing describes a process in which the base station corresponding to the reference signal with the shortest arrival time is determined for the terminal A. A process in which a base station corresponding to a reference signal with a shortest arrival time is determined for the terminal B is similar to the process for the terminal A. Details are not described herein again.

In this case, when the positioning server determines the vertical location information of the first terminal according to the floor numbers of the floors on which the at least one base station is located, the following manner may be used:
using, by the positioning server, the floor number of the floor on which the base station corresponding to the reference signal with the shortest arrival time is located as the vertical location information of the first terminal.

The foregoing example is still used for description. For the terminal A, if it is determined that a base station corresponding to a reference signal with a shortest arrival time is the base station 1, a floor number of a floor on which the base station 1 is located is used as vertical location information of the terminal A. Likewise, for the terminal B, if it is determined that a base station corresponding to a reference signal with a shortest arrival time is the base station 2, a floor number of a floor on which the base station 2 is located is used as vertical location information of the terminal B.

In this embodiment of the present invention, the step of determining, by the positioning server according to the N reference signal time differences, a base station corresponding to a reference signal with a shortest arrival time may be performed before or after the step of obtaining, by a positioning server, floor numbers of floors on which at least one base station is located. If the step of determining, by the positioning server according to the N reference signal time differences, a base station corresponding to a reference signal with a shortest arrival time is performed before the step of obtaining, by a positioning server, floor numbers of floors on which at least one base station is located, after determining, according to the N reference signal time differences, the base station corresponding to the reference signal with the shortest arrival time, the positioning server only needs to obtain a floor number of a floor on which the base station corresponding to the reference signal with the shortest arrival time is located.

If the step of determining, by the positioning server according to the N reference signal time differences, a base station corresponding to a reference signal with a shortest arrival time is performed after the step of determining, by a positioning server, floor numbers of floors on which at least one base station is located, after determining, according to the N reference signal time differences, the base station corresponding to the reference signal with the shortest arrival time, the positioning server searches, in the obtained floor numbers of the floors on which the at least one base station is located, for a floor number of a floor on which the base station corresponding to the reference signal with the shortest arrival time is located.

A sequence between the step of determining, by the positioning server according to the N reference signal time differences, a base station corresponding to a reference signal with a shortest arrival time and the step of obtaining, by a positioning server, floor numbers of floors on which at least one base station is located is relatively flexible, and is not specifically limited herein.

Likewise, to further improve positioning accuracy, the following manner may further be used:

Before the positioning server determines the vertical location information of the first terminal according to the floor numbers of the floors on which the at least one base station is located, the following operations may further be included:
sending, by the positioning server, a reference signal sending instruction message to M base stations, where the reference signal sending instruction message is used to instruct the M base stations to separately broadcast a reference signal, and M is a positive integer greater than 2;
sending, by the positioning server, a reference signal receiving instruction message to the first terminal, where the reference signal receiving instruction message is used to instruct the first terminal to receive reference signals broadcast by the M base stations and to feed back M reference signal time differences, the M reference signal time differences are obtained by separately subtracting an arrival time of a reference signal broadcast by a reference base station from arrival times of the reference signals broadcast by the M base stations, and the reference base station is any one of the M base stations;
receiving, by the positioning server, the M reference signal time differences; and
receiving, by the positioning server, vertical altitudes of the M base stations that are sent by the M base stations; where
the floor numbers of the floors on which the at least one base station is located include floor numbers of floors on which the M base stations are located.

For example, there are three base stations in a positioning area: a base station 1, a base station 2, and a base station 3. The base station 1 serves a terminal A and a terminal B. The positioning server sends a reference signal sending instruction message to all the three base stations. The base station 1, the base station 2, and the base station 3 each begin to broadcast a reference signal after receiving the reference signal sending instruction message. If the positioning server needs to position the terminal A, the positioning server sends a reference signal receiving instruction message to the terminal A. After receiving the reference signal receiving instruction message, the terminal A receives reference signals respectively broadcast by the base station 1, the base station 2, and the base station 3. A time of receiving, by the terminal A, a reference signal broadcast by the base station 1 is Is, a time of receiving a reference signal broadcast by the base station 2 is 2s, and a time of receiving a reference signal broadcast by the base station 3 is 3s. If a reference base station is the base station 3, a time difference of the reference signal broadcast by the base station 1 and received by the terminal A is -2s, a time difference of the reference signal broadcast by the base station 2 and received by the terminal A is -Is, and a time difference of the reference signal broadcast by the base station 3 and received by the terminal A is 0s. The positioning server receives three reference signal time differences: -2s, -Is, and Os; and the positioning server further receives vertical altitudes of the three base stations that are sent by the three base stations. The floor numbers of the floors on which the at least one base station is located include floor numbers of floors on which the three base stations are located.

In this case, when the positioning server determines the vertical location information of the first terminal according to the floor numbers of the floors on which the at least one base station is located, optionally, the following manner may be used:
obtaining, by the positioning server, a first function relationship according to a mapping relationship between the vertical altitudes of the M base stations and the floor numbers of the M base stations, where the first function relationship is used to represent a correspondence between a floor number and a vertical altitude;
calculating, by the positioning server, a vertical altitude of the first terminal according to the M reference signal time differences; and
converting, by the positioning server according to the first function relationship, the vertical altitude that is of the first terminal and that is obtained by means of calculation into a floor number, and using the floor number obtained by means of conversion as the vertical location information of the first terminal.

For example, a vertical altitude of the base station 1 is 100 meters, and a floor number is 1; a vertical altitude of the base station 2 is 103 meters, and a floor number is 2; and a vertical altitude of the base station 3 is 106 meters, and a floor number is 3. It may be obtained according to the base station 1 and the base station 2: vertical altitude/floor number=(103-100)/(2-1)=3; it may be obtained according to the base station 2 and the base station 3: vertical altitude/floor number=(106-103)/(3-2)=3; and it may be obtained according to the base station 1 and the base station 3: vertical altitude/floor number=(106-100)/(3-1)=3. Therefore, it may be obtained that vertical altitude/floor number is (3+3+3)/3=3, and the first function relationship may be y=3x+b, where y is a vertical altitude, and x is a floor number. It may be obtained that b is 97 by substituting a vertical altitude and a floor number of any one of the base station 1, the base station 2, or the base station 3 into the first function relationship. Therefore, the first function relationship is y=3x+97.

For another example, a vertical altitude of the base station 1 is 100 meters, and a floor number is 1; a vertical altitude of the base station 2 is 106 meters, and a floor number is 2; and a vertical altitude of the base station 3 is 109 meters, and a floor number is 3. It may be obtained according to the base station 1 and the base station 2: vertical altitude/floor number=(106-100)/(2-1)=6; it may be obtained according to the base station 2 and the base station 3: vertical altitude/floor number=(109-106)/(3-2)=3; and it may be obtained according to the base station 1 and the base station 3: vertical altitude/floor number=(109-100)/(3-1)=4.5. Therefore, it may be obtained that vertical altitude/floor number is (6+3+4.5)/3=4.5, and the first function relationship may be y=4.5x+b, where y is a vertical altitude, and x is a floor number. It may be obtained that b is 95.5 by substituting the vertical altitude and the floor number of the base station 1 into the first function relationship; it may be obtained that b is 97 by substituting the vertical altitude and the floor number of the base station 2 into the first function relationship; and it may be obtained that b is 95.5 by substituting the vertical altitude and the floor number of the base station 3 into the first function relationship. Therefore, b is (95.5+95.5+97)/3=96, and the first function relationship is y=4.5x+96.

Therefore, after the first function relationship is obtained, if the vertical altitude of the first terminal is 120 meters, it may be obtained that x is 5.3 by substituting y=120 into the first function relationship, and the floor number of 5.3 may be rounded up to 6. If the vertical altitude of the first terminal is 118.5 meters, it may be obtained that x is 5 by substituting y=118.5 into the first function relationship.

In this embodiment of the present invention, calculating the vertical altitude of the first terminal according to the M reference signal time differences is a relatively common technology that is currently used. Details are not described herein.

Likewise, to further improve positioning accuracy, the following manner may further be used:
Before the positioning server determines the vertical location information of the first terminal according to the floor numbers of the floors on which the at least one base station is located, the following operations may further be included:
   sending, by the positioning server, a reference signal sending instruction message to M base stations, where the reference signal sending instruction message is used to instruct the M base stations to separately broadcast a reference signal, and M is a positive integer greater than 2;
   sending, by the positioning server, a reference signal receiving instruction message to the first terminal, where the reference signal receiving instruction message is used to instruct the first terminal to receive reference signals broadcast by the M base stations and to feed back M reference signal time differences, the M reference signal time differences are obtained by separately subtracting an arrival time of a reference signal broadcast by a reference base station from arrival times of the reference signals broadcast by the M base stations, and the reference base station is any one of the M base stations;
   receiving, by the positioning server, the M reference signal time differences;
   receiving, by the positioning server, M receive powers sent by the first terminal, where the M receive powers are powers used by the first terminal to receive the reference signals broadcast by the M base stations; and
   receiving, by the positioning server, vertical altitudes of the M base stations that are sent by the M base stations; where
   the floor numbers of the floors on which the at least one base station is located include floor numbers of floors on which the M base stations are located.

In this case, when the positioning server determines the vertical location information of the first terminal according to the floor numbers of the floors on which the at least one base station is located, optionally, the following manner may be used:
obtaining, by the positioning server, a second function relationship according to a mapping relationship between the vertical altitudes of the M base stations and the floor numbers of the M base stations, where the second function relationship is used to represent a correspondence between a floor number and a vertical altitude;
calculating, by the positioning server, a first vertical altitude of the first terminal according to the M reference signal time differences;
calculating, by the positioning server, a second vertical altitude of the first terminal according to the M receive powers;
obtaining, by the positioning server, a final vertical altitude of the first terminal according to the first vertical altitude and the second vertical altitude; and
converting, by the positioning server according to the second function relationship, the final vertical altitude that is of the first terminal and that is obtained by means of calculation into a floor number, and using the floor number obtained by means of conversion as the vertical location information of the first terminal.

In this embodiment of the present invention, a determining manner of the second function is similar to the determining manner of the first function. Details are not described herein again.

For example, the second function relationship is y=3x+97, where x is the floor number, and y is the vertical altitude of the first terminal. If the first vertical altitude obtained by means of calculation is 105 meters, and the second vertical altitude obtained by means of calculation is 107 meters, an average value of 106 meters of the first vertical altitude and the second vertical altitude may be used as the final vertical altitude of the first terminal. In this case, it may be obtained that the floor number is 3 by substituting the final vertical altitude of 106 meters into the second function relationship.

For another example, the second function relationship is y=3x+97, where x is the floor number, and y is the vertical altitude of the first terminal. If the first vertical altitude obtained by means of calculation is 105 meters, and the second vertical altitude obtained by means of calculation is 107 meters, a sum of 105.4 meters of a product obtained by multiplying a first weight value 80% by the first vertical altitude and a product obtained by multiplying a second weight value 20% by the second vertical altitude may be used as the final vertical altitude of the first terminal. In this case, it may be obtained that the floor number is 2.8 by substituting the final vertical altitude of 105.4 meters into the second function relationship, and the floor number of 2.8 is rounded up to 3 and used as the vertical location information of the first terminal.

Therefore, in this embodiment of the present invention, when a terminal is located indoors, a positioning server can determine a floor number of a specific floor on which the terminal is located, in addition to a vertical altitude of the terminal, so that indoor positioning accuracy is improved.

Referring to FIG. 3, in this embodiment of the present invention, an indoor positioning procedure that is of a base station side and that is corresponding to the foregoing method embodiment is as follows:
Step 300: The base station determines a floor number of a floor on which the base station is located.

In this embodiment of the present invention, the floor number may be 2, 3, 4, or the like. The floor number is specifically carried in a message, and the floor number may be a value in a floor index field.

According to the foregoing description, the base station sends the floor number of the floor on which the base station is located. However, if a positioning server determines only the floor number, but does not learn location information of a building, positioning is meaningless, and accuracy is relatively low. For example, if a base station A reports to the positioning server that a floor number of a floor on which the base station A is located is 2, that is, for the terminal 1 served by the base station A, the positioning server learns only that the terminal 1 is located on the second floor, but does not learn a specific location of a building, thus the positioning is still meaningless. Therefore, in this embodiment of the present invention, the base station not only needs to send the floor number of the floor on which the base station is located to the positioning server, but also needs to send coordinate information of a location of the base station, for example, (X, Y, Z). In this way, the positioning server can determine, according to the coordinate information sent by the base station, a building in which the base station is located, and can determine, according to the floor number, a specific floor on which the terminal is located, so that accurate positioning can be implemented.

However, a current protocol has specified that a base station needs to send coordinate information of a location of the base station to a positioning server when positioning is performed. Therefore, details are not described herein.
Step 310: The base station sends the floor number to a positioning server.

In this embodiment of the present invention, further, the method may further include the following operation:
sending, by the base station, identification information of a first terminal to the positioning server, where the base station is a serving base station of the first terminal.

In this case, the positioning server may use the floor number as vertical location information of the first terminal.

In this embodiment of the present invention, further, the method may further include the following operations:
receiving, by the base station, a reference signal sending instruction message sent by the positioning server; and
broadcasting, by the base station, a reference signal according to the reference signal sending instruction message; where
the base station is a base station corresponding to a reference signal with a shortest arrival time among N reference signal time differences sent by the first terminal, the N reference signal time differences are obtained by separately subtracting an arrival time of a reference signal broadcast by a reference base station from arrival times of reference signals broadcast by N base stations, the reference base station is any one of the N base stations, and N is a positive integer greater than 0.

In this case, the positioning server may also use the floor number as vertical location information of the first terminal. In this embodiment of the present invention, further, the method may further include the following operations:
receiving, by the base station, a reference signal sending instruction message sent by the positioning server;
broadcasting, by the base station, a reference signal according to the reference signal sending instruction message; and
sending, by the base station, a vertical altitude of the base station.

The base station sends the floor number only after a trigger message is received. In this embodiment of the present invention, further, before the base station sends the floor number to the positioning server, the following operation may be further included:
receiving, by the base station, a positioning measurement request sent by the positioning server; or
receiving, by the base station, a positioning measurement request sent by a terminal served by the base station.

That is, the positioning measurement request sent by the positioning server may be used as a message for triggering the base station to send the floor number. Alternatively, the positioning measurement request sent by the terminal served by the base station may be used as a message for triggering the base station to send the floor number.

Therefore, the base station sends the floor number of the floor on which the base station is located to the positioning server, and the positioning server may determine vertical location information of the terminal according to the received floor number. In this way, that the positioning server uses only the vertical altitude of the location of the terminal as the vertical location information of the terminal is avoided, so that positioning accuracy is improved.

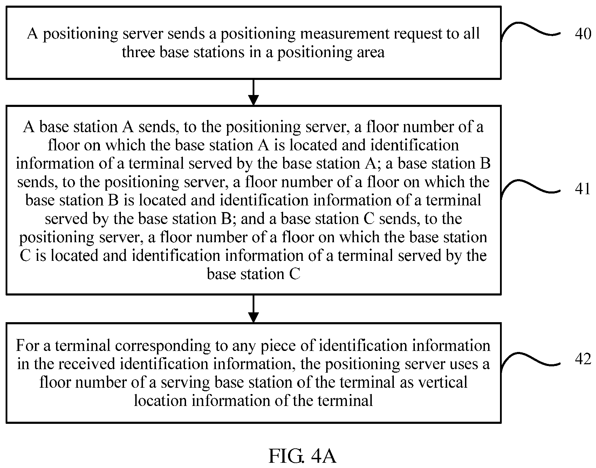

As shown in FIG. 4A, for a better understanding of this embodiment of the present invention, the following gives a specific application scenario, and describes a process of determining a vertical altitude for indoor positioning by using an example.
Step 40: The positioning server sends a positioning measurement request to all three base stations in a positioning area.
   The three base stations in this step are respectively a base station A, a base station B, and a base station C.
Step 41: The base station A sends, to the positioning server, a floor number of a floor on which the base station A is located and identification information of a terminal served by the base station A; the base station B sends, to the positioning server, a floor number of a floor on which the base station B is located and identification information of a terminal served by the base station B; and the base station C sends, to the positioning server, a floor number of a floor on which the base station C is located and identification information of a terminal served by the base station C.
Step 42: For a terminal corresponding to any piece of identification information in the received identification information, the positioning server uses a floor number of a serving base station of the terminal as vertical location information of the terminal.

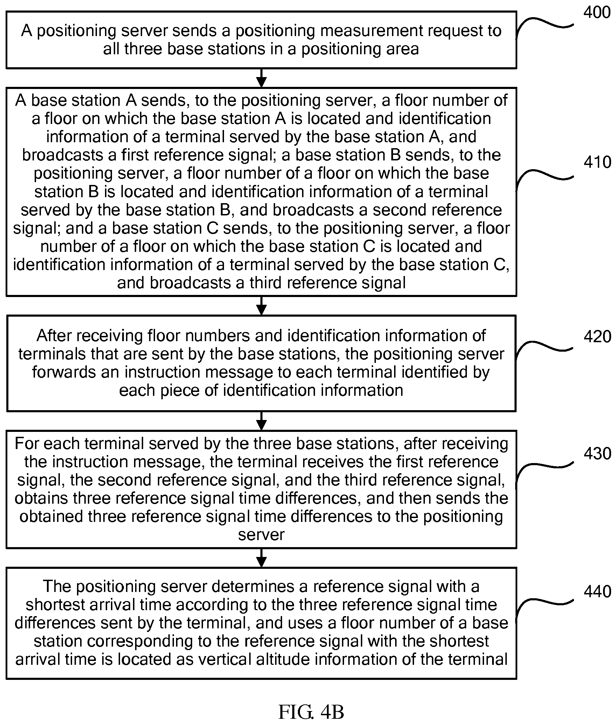

According to the foregoing description, the floor number of the serving base station of the terminal is directly used as the vertical location information of the terminal. Certainly, there may be another determining manner, as shown in FIG. 4B:
Step 400: The positioning server sends a positioning measurement request to all three base stations in a positioning area.
   The three base stations in this step are respectively a base station A, a base station B, and a base station C.
Step 410: The base station A sends, to the positioning server, a floor number of a floor on which the base station A is located and identification information of a terminal served by the base station A, and broadcasts a first reference signal; the base station B sends, to the positioning server, a floor number of a floor on which the base station B is located and identification information of a terminal served by the base station B, and broadcasts a second reference signal; and the base station C sends, to the positioning server, a floor number of a floor on which the base station C is located and identification information of a terminal served by the base station C, and broadcasts a third reference signal.
Step 420: After receiving floor numbers and identification information of terminals that are sent by the base stations, the positioning server forwards an instruction message to each terminal identified by each piece of identification information.
Step 430: For each terminal served by the three base stations, after receiving the instruction message, the terminal receives the first reference signal, the second reference signal, and the third reference signal, obtains three reference signal time differences, and then sends the obtained three reference signal time differences to the positioning server.
Step 440: The positioning server determines a reference signal with a shortest arrival time according to the three reference signal time differences sent by the terminal, and uses a floor number of a base station corresponding to the reference signal with the shortest arrival time is located as vertical altitude information of the terminal.

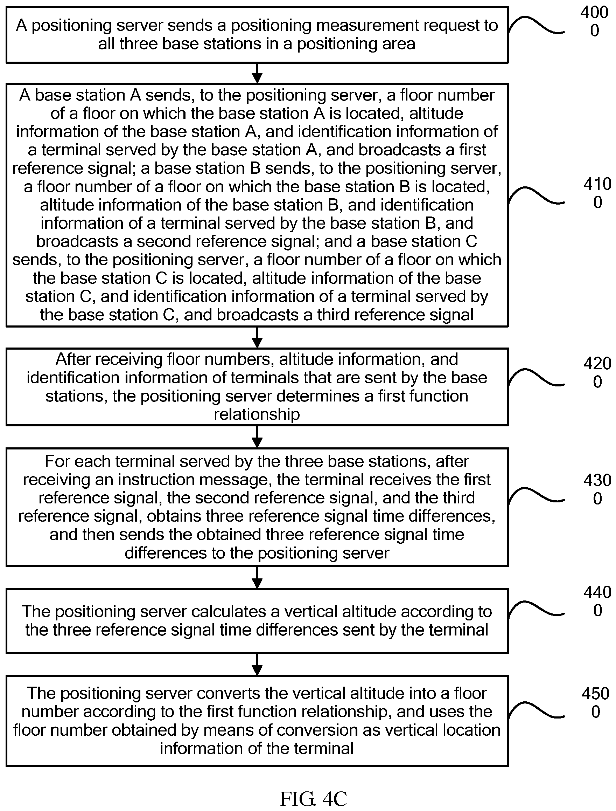

According to the foregoing description, the reference signal with the shortest arrival time is determined according to the reference signal time differences sent by the terminal, and the floor number of the base station corresponding to the reference signal with the shortest arrival time is used as the vertical altitude information of the terminal. Certainly, there may further be another determining manner, as shown in FIG. 4C:
Step 4000: The positioning server sends a positioning measurement request to all three base stations in a positioning area.
   The three base stations in this step are respectively a base station A, a base station B, and a base station C.
Step 4100: The base station A sends, to the positioning server, a floor number of a floor on which the base station A is located, altitude information of the base station A, and identification information of a terminal served by the base station A, and broadcasts a first reference signal; the base station B sends, to the positioning server, a floor number of a floor on which the base station B is located, altitude information of the base station B, and identification information of a terminal served by the base station B, and broadcasts a second reference signal; and the base station C sends, to the positioning server, a floor number of a floor on which the base station C is located, altitude information of the base station C, and identification information of a terminal served by the base station C, and broadcasts a third reference signal.
Step 4200: After receiving floor numbers, altitude information, and identification information of terminals that are sent by the base stations, the positioning server determines a first function relationship.
Step 4300: For each terminal served by the three base stations, after receiving an instruction message, the terminal receives the first reference signal, the second reference signal, and the third reference signal, obtains three reference signal time differences, and then sends the obtained three reference signal time differences to the positioning server.
Step 4400: The positioning server calculates a vertical altitude according to the three reference signal time differences sent by the terminal.
Step 4500: The positioning server converts the vertical altitude into a floor number according to the first function relationship, and uses the floor number obtained by means of conversion as vertical location information of the terminal.

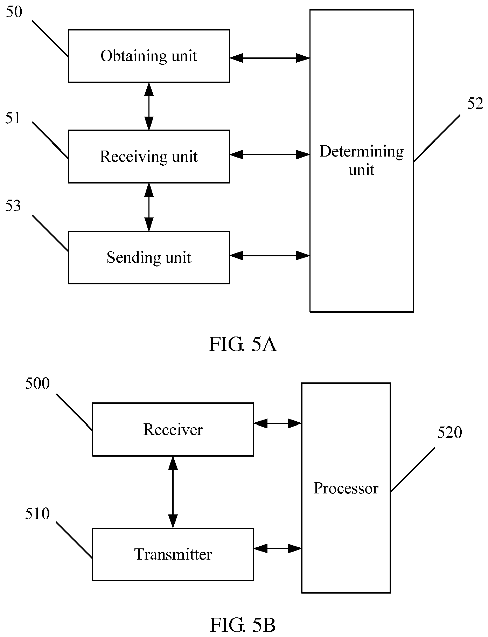

Based on the technical solutions of the foregoing corresponding methods, referring to FIG. 5A, an embodiment of the present invention provides a positioning server. The positioning server includes an obtaining unit 50, a receiving unit 51, and a determining unit 52.

The obtaining unit 50 is configured to obtain floor numbers of floors on which at least one base station is located.

The receiving unit 51 is configured to receive identification information of a first terminal.

The determining unit 52 is configured to determine the first terminal according to the identification information.

The determining unit 52 is further configured to determine vertical location information of the first terminal according to the floor numbers of the floors on which the at least one base station is located.

In this embodiment of the present invention, the floor number obtained by the obtaining unit 50 may be 2, 3, 4, or the like. The floor number is specifically carried in a message, and the floor number may be a value in a floor index field.

According to foregoing description, the obtaining unit 50 needs to obtain the floor numbers of the floors on which the at least one base station is located. However, if the obtaining unit 50 determines only the floor number, but does not obtain location information of a building, positioning is meaningless, and accuracy is relatively low. For example, a base station A reports to the positioning server that a floor number of a floor on which the base station A is located is 2. For a terminal 1 served by the base station A, if the determining unit 52 uses the floor number of the floor on which the base station A is located as vertical location information of the terminal 1, that is, the determining unit 52 learns only that the terminal 1 is located on the second floor, but does not learn a specific building in which the terminal 1 is located, thus the positioning is still meaningless. Therefore, in this embodiment of the present invention, the obtaining unit 50 not only needs to obtain the floor numbers of the floors on which the at least one base station is located, but also needs to obtain coordinate information of a location of the at least one base station, for example, (X, Y, Z). In this way, the determining unit 52 can determine, according to the coordinate information sent by the base station, a building in which the base station is located, and can determine, according to the floor number, a specific floor on which the terminal is located, so that accurate positioning can be implemented.

In this embodiment of the present invention, if the obtaining unit 50 obtains the floor numbers of the floors on which the at least one base station is located, the base station needs to receive a positioning measurement request message, so that the base station can be triggered to send a floor number of a floor on which the base station is located. The positioning measurement request message may be sent by the positioning server, or may be sent by a terminal served by the base station. If the positioning measurement request message is sent by the positioning server, the positioning server may further include a sending unit 53, and the sending unit 53 needs to send the positioning measurement request message before the floor numbers of the floors on which the at least one base station is located are obtained.

In this embodiment of the present invention, optionally, the floor numbers of the floors on which the at least one base station is located may include a floor number of a floor on which a first base station is located, and the first base station may be a serving base station of the first terminal.

When determining the vertical location information of the first terminal according to the floor numbers of the floors on which the at least one base station is located, the determining unit 52 is specifically configured to:
use the floor number of the floor on which the first base station is located as the vertical location information of the first terminal.

According to the foregoing description, the determining unit 52 uses a floor number of a floor on which a serving base station of a terminal is located as vertical location information of the terminal. However, because accuracy is relatively low, to further improve positioning accuracy, the following manner may further be used:

In this embodiment of the present invention, further, a sending unit 53 may further be included, and the sending unit 53 is configured to:
send a reference signal sending instruction message to N base stations, where the reference signal sending instruction message is used to instruct the N base stations to separately broadcast a reference signal, and N is a positive integer greater than 0.

The sending unit 53 is further configured to send a reference signal receiving instruction message to the first terminal, where the reference signal receiving instruction message is used to instruct the first terminal to receive reference signals broadcast by the N base stations and to feed back N reference signal time differences, the N reference signal time differences are obtained by separately subtracting an arrival time of a reference signal broadcast by a reference base station from arrival times of the reference signals broadcast by the N base stations, and the reference base station is any one of the N base stations.

The receiving unit 51 is further configured to receive the N reference signal time differences.

The determining unit 52 is further configured to determine, according to the N reference signal time differences, a base station corresponding to a reference signal with a shortest arrival time.

The floor numbers that are of the floors on which the at least one base station is located and obtained by the obtaining unit 50 include a floor number of a floor on which the base station corresponding to the reference signal with the shortest arrival time is located.

When determining the vertical location information of the first terminal according to the floor numbers of the floors on which the at least one base station is located, the determining unit 52 is specifically configured to:
use the floor number of the floor on which the base station corresponding to the reference signal with the shortest arrival time is located as the vertical location information of the first terminal.

Likewise, to further improve positioning accuracy, the following manner may further be used:

In this embodiment of the present invention, further, a sending unit 53 may further be included, and the sending unit 53 is configured to:
send a reference signal sending instruction message to M base stations, where the reference signal sending instruction message is used to instruct the M base stations to separately broadcast a reference signal, and M is a positive integer greater than 2.

The sending unit 53 is further configured to send a reference signal receiving instruction message to the first terminal, where the reference signal receiving instruction message is used to instruct the first terminal to receive reference signals broadcast by the M base stations and to feed back M reference signal time differences, the M reference signal time differences are obtained by separately subtracting an arrival time of a reference signal broadcast by a reference base station from arrival times of the reference signals broadcast by the M base stations, and the reference base station is any one of the M base stations.

The receiving unit 51 is further configured to receive the M reference signal time differences.

The receiving unit 51 is further configured to receive vertical altitudes of the M base stations that are sent by the M base stations.

The floor numbers that are of the floors on which the at least one base station is located and obtained by the obtaining unit 50 include floor numbers of floors on which the M base stations are located.

When determining the vertical location information of the first terminal according to the floor numbers of the floors on which the at least one base station is located, the determining unit 52 is specifically configured to:
obtain a first function relationship according to a mapping relationship between the vertical altitudes of the M base stations and the floor numbers of the M base stations, where the first function relationship is used to represent a correspondence between a floor number and a vertical altitude;
calculate a vertical altitude of the first terminal according to the M reference signal time differences; and
convert, according to the first function relationship, the vertical altitude that is of the first terminal and that is obtained by means of calculation into a floor number, and use the floor number obtained by means of conversion as the vertical location information of the first terminal.

Likewise, to further improve positioning accuracy, the following manner may further be used:

In this embodiment of the present invention, further, a sending unit 53 may further be included, and the sending unit 53 is configured to:
send a reference signal sending instruction message to M base stations, where the reference signal sending instruction message is used to instruct the M base stations to separately broadcast a reference signal, and M is a positive integer greater than 2.

The sending unit 53 is further configured to send a reference signal receiving instruction message to the first terminal, where the reference signal receiving instruction message is used to instruct the first terminal to receive reference signals broadcast by the M base stations and to feed back M reference signal time differences, the M reference signal time differences are obtained by separately subtracting an arrival time of a reference signal broadcast by a reference base station from arrival times of the reference signals broadcast by the M base stations, and the reference base station is any one of the M base stations.

The receiving unit 51 is further configured to receive the M reference signal time differences.

The receiving unit 51 is further configured to receive M receive powers sent by the first terminal, where the M receive powers are powers used by the first terminal to receive the reference signals broadcast by the M base stations.

The receiving unit 51 is further configured to receive vertical altitudes of the M base stations that are sent by the M base stations.

The floor numbers that are of the floors on which the at least one base station is located and obtained by the obtaining unit 50 include floor numbers of floors on which the M base stations are located.

When determining the vertical location information of the first terminal according to the floor numbers of the floors on which the at least one base station is located, the determining unit 52 is specifically configured to:
obtain a second function relationship according to a mapping relationship between the vertical altitudes of the M base stations and the floor numbers of the M base stations, where the second function relationship is used to represent a correspondence between a floor number and a vertical altitude;
calculate a first vertical altitude of the first terminal according to the M reference signal time differences;
calculate a second vertical altitude of the first terminal according to the M receive powers;
obtain a final vertical altitude of the first terminal according to the first vertical altitude and the second vertical altitude; and
convert, according to the second function relationship, the final vertical altitude that is of the first terminal and that is obtained by means of calculation into a floor number, and use the floor number obtained by means of conversion as the vertical location information of the first terminal.

In this embodiment of the present invention, further, the sending unit 53 is further configured to:
send a positioning measurement request.

In this embodiment of the present invention, operations performed by the receiving unit 51 may be performed by a receiver 500, operations performed by the sending unit 53 may be performed by a transmitter 510, and operations performed by the obtaining unit 50 and the determining unit 52 may be performed by a processor 520, as shown in FIG. 5B.

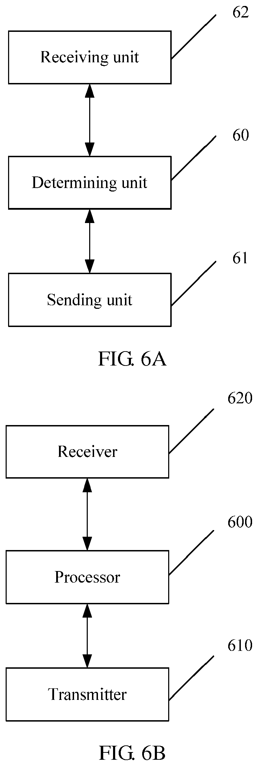

Based on the technical solutions of the foregoing corresponding methods, referring to FIG. 6A, an embodiment of the present invention provides a base station. The base station includes a determining unit 60 and a sending unit 61.

The determining unit 60 is configured to determine a floor number of a floor on which the base station is located.

The sending unit 61 is configured to send the floor number to a positioning server.

In this embodiment of the present invention, further, the sending unit 61 is further configured to:
send identification information of a first terminal to the positioning server, where the base station is a serving base station of the first terminal.

In this scenario, the positioning server may use the floor number of the floor on which the base station is located as vertical location information of the first terminal.

In this embodiment of the present invention, further, a receiving unit 62 may further be included, and the receiving unit 62 is configured to:
receive a reference signal sending instruction message sent by the positioning server.

The sending unit 61 is further configured to broadcast a reference signal according to the reference signal sending instruction message.

The base station is a base station corresponding to a reference signal with a shortest arrival time among N reference signal time differences sent by the first terminal, the N reference signal time differences are obtained by separately subtracting an arrival time of a reference signal broadcast by a reference base station from arrival times of reference signals broadcast by N base stations, the reference base station is any one of the N base stations, and N is a positive integer greater than 0.

In this scenario, the positioning server may use a floor number of a floor on which the base station corresponding to the reference signal with the shortest arrival time is located as the vertical location information of the first terminal.

In this embodiment of the present invention, further, a receiving unit 62 may further be included, and the receiving unit 62 is configured to:
receive a reference signal sending instruction message sent by the positioning server.

The sending unit 61 is further configured to broadcast a reference signal according to the reference signal sending instruction message.

The sending unit 61 is further configured to send a vertical altitude of the base station.

In this scenario, the positioning server may determine the vertical location information of the first terminal according to a floor number of a floor on which each base station is located.

In this embodiment of the present invention, further, the receiving unit 62 is further configured to:
receive a positioning measurement request sent by the positioning server; or
receive a positioning measurement request sent by a terminal served by the base station.

In this embodiment of the present invention, operations performed by the determining unit 60 may be performed by a processor 600, operations performed by the sending unit 61 may be performed by a transmitter 610, and operations performed by the receiving unit 62 may be performed by a receiver 620, as shown in FIG. 6B.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although embodiments of the present invention have been described, persons skilled in the art can make changes and modifications to these embodiments once they learn the basic inventive concept. Therefore, the claims attached hereto are intended to be construed as including the foregoing embodiments and all changes and modifications falling within the scope of the present invention.

## Claims

1. An indoor positioning method, comprising:
obtaining, by a positioning server, floor numbers of floors on which at least one base station is located;
receiving, by the positioning server, identification information of a first terminal;
determining, by the positioning server, the first terminal according to the identification information; and
determining, by the positioning server, vertical location information of the first terminal according to the floor numbers of the floors on which the at least one base station is located.

2. The method according to claim 1, wherein the floor numbers of the floors on which the at least one base station is located comprise a floor number of a floor on which a first base station is located, and the first base station is a serving base station of the first terminal; and
the determining, by the positioning server, vertical location information of the first terminal according to the floor numbers of the floors on which the at least one base station is located comprises:
using, by the positioning server, the floor number of the floor on which the first base station is located as the vertical location information of the first terminal.

3. The method according to claim 1, wherein before the determining, by the positioning server, vertical location information of the first terminal according to the floor numbers of the floors on which the at least one base station is located, the method further comprises:
sending, by the positioning server, a reference signal sending instruction message to N base stations, wherein the reference signal sending instruction message is used to instruct the N base stations to separately broadcast a reference signal, and N is a positive integer greater than 0;
sending, by the positioning server, a reference signal receiving instruction message to the first terminal, wherein the reference signal receiving instruction message is used to instruct the first terminal to receive reference signals broadcast by the N base stations and to feed back N reference signal time differences, the N reference signal time differences are obtained by separately subtracting an arrival time of a reference signal broadcast by a reference base station from arrival times of the reference signals broadcast by the N base stations, and the reference base station is any one of the N base stations;
receiving, by the positioning server, the N reference signal time differences; and
determining, by the positioning server according to the N reference signal time differences, a base station corresponding to a reference signal with a shortest arrival time; wherein
the floor numbers of the floors on which the at least one base station is located comprise a floor number of a floor on which the base station corresponding to the reference signal with the shortest arrival time is located; and
the determining, by the positioning server, vertical location information of the first terminal according to the floor numbers of the floors on which the at least one base station is located comprises:
using, by the positioning server, the floor number of the floor on which the base station corresponding to the reference signal with the shortest arrival time is located as the vertical location information of the first terminal.

4. The method according to claim 1, wherein before the determining, by the positioning server, vertical location information of the first terminal according to the floor numbers of the floors on which the at least one base station is located, the method further comprises:
sending, by the positioning server, a reference signal sending instruction message to M base stations, wherein the reference signal sending instruction message is used to instruct the M base stations to separately broadcast a reference signal, and M is a positive integer greater than 2;
sending, by the positioning server, a reference signal receiving instruction message to the first terminal, wherein the reference signal receiving instruction message is used to instruct the first terminal to receive reference signals broadcast by the M base stations and to feed back M reference signal time differences, the M reference signal time differences are obtained by separately subtracting an arrival time of a reference signal broadcast by a reference base station from arrival times of the reference signals broadcast by the M base stations, and the reference base station is any one of the M base stations;
receiving, by the positioning server, the M reference signal time differences; and
receiving, by the positioning server, vertical altitudes of the M base stations that are sent by the M base stations; wherein
the floor numbers of the floors on which the at least one base station is located comprise floor numbers of floors on which the M base stations are located; and
the determining, by the positioning server, vertical location information of the first terminal according to the floor numbers of the floors on which the at least one base station is located comprises:
obtaining, by the positioning server, a first function relationship according to a mapping relationship between the vertical altitudes of the M base stations and the floor numbers of the M base stations, wherein the first function relationship is used to represent a correspondence between a floor number and a vertical altitude;
calculating, by the positioning server, a vertical altitude of the first terminal according to the M reference signal time differences; and
converting, by the positioning server according to the first function relationship, the vertical altitude that is of the first terminal and that is obtained by means of calculation into a floor number, and using the floor number obtained by means of conversion as the vertical location information of the first terminal.

5. The method according to claim 1, wherein before the determining, by the positioning server, vertical location information of the first terminal according to the floor numbers of the floors on which the at least one base station is located, the method further comprises:
sending, by the positioning server, a reference signal sending instruction message to M base stations, wherein the reference signal sending instruction message is used to instruct the M base stations to separately broadcast a reference signal, and M is a positive integer greater than 2;
sending, by the positioning server, a reference signal receiving instruction message to the first terminal, wherein the reference signal receiving instruction message is used to instruct the first terminal to receive reference signals broadcast by the M base stations and to feed back M reference signal time differences, the M reference signal time differences are obtained by separately subtracting an arrival time of a reference signal broadcast by a reference base station from arrival times of the reference signals broadcast by the M base stations, and the reference base station is any one of the M base stations;
receiving, by the positioning server, the M reference signal time differences;
receiving, by the positioning server, M receive powers sent by the first terminal, wherein the M receive powers are powers used by the first terminal to receive the reference signals broadcast by the M base stations; and
receiving, by the positioning server, vertical altitudes of the M base stations that are sent by the M base stations; wherein
the floor numbers of the floors on which the at least one base station is located comprise floor numbers of floors on which the M base stations are located; and
the determining, by the positioning server, vertical location information of the first terminal according to the floor numbers of the floors on which the at least one base station is located comprises:
obtaining, by the positioning server, a second function relationship according to a mapping relationship between the vertical altitudes of the M base stations and the floor numbers of the M base stations, wherein the second function relationship is used to represent a correspondence between a floor number and a vertical altitude;
calculating, by the positioning server, a first vertical altitude of the first terminal according to the M reference signal time differences;
calculating, by the positioning server, a second vertical altitude of the first terminal according to the M receive powers;
obtaining, by the positioning server, a final vertical altitude of the first terminal according to the first vertical altitude and the second vertical altitude; and
converting, by the positioning server according to the second function relationship, the final vertical altitude that is of the first terminal and that is obtained by means of calculation into a floor number, and using the floor number obtained by means of conversion as the vertical location information of the first terminal.

6. The method according to any one of claims 3 to 5, before the obtaining, by a positioning server, floor numbers of floors on which at least one base station is located, the method further comprises:
sending, by the positioning server, a positioning measurement request.

7. An indoor positioning method, comprising:
determining, by a base station, a floor number of a floor on which the base station is located; and
sending, by the base station, the floor number to a positioning server.

8. The method according to claim 7, wherein the method further comprises:
sending, by the base station, identification information of a first terminal to the positioning server, wherein the base station is a serving base station of the first terminal.

9. The method according to claim 7, wherein the method further comprises:
receiving, by the base station, a reference signal sending instruction message sent by the positioning server; and
broadcasting, by the base station, a reference signal according to the reference signal sending instruction message; wherein
the base station is a base station corresponding to a reference signal with a shortest arrival time among N reference signal time differences sent by a first terminal, the N reference signal time differences are obtained by separately subtracting an arrival time of a reference signal broadcast by a reference base station from arrival times of reference signals broadcast by N base stations, the reference base station is any one of the N base stations, and N is a positive integer greater than 0.

10. The method according to claim 7, wherein the method further comprises:
receiving, by the base station, a reference signal sending instruction message sent by the positioning server;
broadcasting, by the base station, a reference signal according to the reference signal sending instruction message; and
sending, by the base station, a vertical altitude of the base station.

11. The method according to any one of claims 7 to 10, wherein before the sending, by the base station, the floor number to a positioning server, the method further comprises:
receiving, by the base station, the positioning measurement request sent by the positioning server; or
receiving, by the base station, a positioning measurement request sent by a terminal served by the base station.

12. A positioning server, comprising:
an obtaining unit, configured to obtain floor numbers of floors on which at least one base station is located;
a receiving unit, configured to receive identification information of a first terminal; and
a determining unit, configured to determine the first terminal according to the identification information; wherein
the determining unit is further configured to determine vertical location information of the first terminal according to the floor numbers of the floors on which the at least one base station is located.

13. The positioning server according to claim 12, wherein the floor numbers of the floors on which the at least one base station is located comprise a floor number of a floor on which a first base station is located, and the first base station is a serving base station of the first terminal; and
when determining the vertical location information of the first terminal according to the floor numbers of the floors on which the at least one base station is located, the determining unit is specifically configured to:
use the floor number of the floor on which the first base station is located as the vertical location information of the first terminal.

14. The positioning server according to claim 12, further comprising a sending unit, wherein the sending unit is configured to:
send a reference signal sending instruction message to N base stations, wherein the reference signal sending instruction message is used to instruct the N base stations to separately broadcast a reference signal, and N is a positive integer greater than 0; wherein
the sending unit is further configured to send a reference signal receiving instruction message to the first terminal, wherein the reference signal receiving instruction message is used to instruct the first terminal to receive reference signals broadcast by the N base stations and to feed back N reference signal time differences, the N reference signal time differences are obtained by separately subtracting an arrival time of a reference signal broadcast by a reference base station from arrival times of the reference signals broadcast by the N base stations, and the reference base station is any one of the N base stations;
the receiving unit is further configured to receive the N reference signal time differences;
the determining unit is further configured to determine, according to the N reference signal time differences, a base station corresponding to a reference signal with a shortest arrival time;
the floor numbers that are of the floors on which the at least one base station is located and obtained by the obtaining unit comprise a floor number of a floor on which the base station corresponding to the reference signal with the shortest arrival time is located; and
when determining the vertical location information of the first terminal according to the floor numbers of the floors on which the at least one base station is located, the determining unit is specifically configured to:
use the floor number of the floor on which the base station corresponding to the reference signal with the shortest arrival time is located as the vertical location information of the first terminal.

15. The positioning server according to claim 12, further comprising a sending unit, wherein the sending unit is configured to:
send a reference signal sending instruction message to M base stations, wherein the reference signal sending instruction message is used to instruct the M base stations to separately broadcast a reference signal, and M is a positive integer greater than 2; wherein
the sending unit is further configured to send a reference signal receiving instruction message to the first terminal, wherein the reference signal receiving instruction message is used to instruct the first terminal to receive reference signals broadcast by the M base stations and to feed back M reference signal time differences, the M reference signal time differences are obtained by separately subtracting an arrival time of a reference signal broadcast by a reference base station from arrival times of the reference signals broadcast by the M base stations, and the reference base station is any one of the M base stations;
the receiving unit is further configured to receive the M reference signal time differences;
the receiving unit is further configured to receive vertical altitudes of the M base stations that are sent by the M base stations;
the floor numbers that are of the floors on which the at least one base station is located and obtained by the obtaining unit comprise floor numbers of floors on which the M base stations are located; and
when determining the vertical location information of the first terminal according to the floor numbers of the floors on which the at least one base station is located, the determining unit is specifically configured to:
obtain a first function relationship according to a mapping relationship between the vertical altitudes of the M base stations and the floor numbers of the M base stations, wherein the first function relationship is used to represent a correspondence between a floor number and a vertical altitude;
calculate a vertical altitude of the first terminal according to the M reference signal time differences; and
convert, according to the first function relationship, the vertical altitude that is of the first terminal and that is obtained by means of calculation into a floor number, and use the floor number obtained by means of conversion as the vertical location information of the first terminal.

16. The positioning server according to claim 12, further comprising a sending unit, wherein the sending unit is configured to:
send a reference signal sending instruction message to M base stations, wherein the reference signal sending instruction message is used to instruct the M base stations to separately broadcast a reference signal, and M is a positive integer greater than 2; wherein
the sending unit is further configured to send a reference signal receiving instruction message to the first terminal, wherein the reference signal receiving instruction message is used to instruct the first terminal to receive reference signals broadcast by the M base stations and to feed back M reference signal time differences, the M reference signal time differences are obtained by separately subtracting an arrival time of a reference signal broadcast by a reference base station from arrival times of the reference signals broadcast by the M base stations, and the reference base station is any one of the M base stations;
the receiving unit is further configured to receive the M reference signal time differences;
the receiving unit is further configured to receive M receive powers sent by the first terminal, wherein the M receive powers are powers used by the first terminal to receive the reference signals broadcast by the M base stations;
the receiving unit is further configured to receive vertical altitudes of the M base stations that are sent by the M base stations;
the floor numbers that are of the floors on which the at least one base station is located and obtained by the obtaining unit comprise floor numbers of floors on which the M base stations are located; and
when determining the vertical location information of the first terminal according to the floor numbers of the floors on which the at least one base station is located, the determining unit is specifically configured to:
obtain a second function relationship according to a mapping relationship between the vertical altitudes of the M base stations and the floor numbers of the M base stations, wherein the second function relationship is used to represent a correspondence between a floor number and a vertical altitude;
calculate a first vertical altitude of the first terminal according to the M reference signal time differences;
calculate a second vertical altitude of the first terminal according to the M receive powers;
obtain a final vertical altitude of the first terminal according to the first vertical altitude and the second vertical altitude; and
convert, according to the second function relationship, the final vertical altitude that is of the first terminal and that is obtained by means of calculation into a floor number, and use the floor number obtained by means of conversion as the vertical location information of the first terminal.

17. The positioning server according to any one of claims 14 to 16, wherein the sending unit is further configured to:
send a positioning measurement request.

18. Abase station, comprising:
a determining unit, configured to determine a floor number of a floor on which the base station is located; and
a sending unit, configured to send the floor number to a positioning server.

19. The base station according to claim 18, wherein the sending unit is further configured to:
send identification information of a first terminal to the positioning server, wherein the base station is a serving base station of the first terminal.

20. The base station according to claim 18, further comprising a receiving unit, wherein the receiving unit is configured to:
receive a reference signal sending instruction message sent by the positioning server; wherein
the sending unit is further configured to broadcast a reference signal according to the reference signal sending instruction message; and
the base station is a base station corresponding to a reference signal with a shortest arrival time among N reference signal time differences sent by a first terminal, the N reference signal time differences are obtained by separately subtracting an arrival time of a reference signal broadcast by a reference base station from arrival times of reference signals broadcast by N base stations, the reference base station is any one of the N base stations, and N is a positive integer greater than 0.

21. The base station according to claim 18, further comprising a receiving unit, wherein the receiving unit is configured to:
receive a reference signal sending instruction message sent by the positioning server; wherein
the sending unit is further configured to broadcast a reference signal according to the reference signal sending instruction message; and
the sending unit is further configured to send a vertical altitude of the base station.

22. The base station according to claim 20 or 21, wherein the receiving unit is further configured to:
receive the positioning measurement request sent by the positioning server; or
receive a positioning measurement request sent by a terminal served by the base station.
